## Europäisches Patentamt
## European Patent Office
## Office européen des brevets

(11) Veröffentlichungsnummer: **0 296 462 B1**

(12) **EUROPÄISCHE PATENTSCHRIFT**

(45) Veröffentlichungstag der Patentschrift: **03.08.94**

(21) Anmeldenummer: **88109467.6**

(22) Anmeldetag: **01.03.85**

(60) Veröffentlichungsnummer der früheren Anmeldung nach Art. 76 EPÜ: **0 174 354**

(51) Int. Cl.⁵: **F16K 11/07**, F16K 3/26

(54) **Logikventil.**

(30) Priorität: **01.03.84 DE 3407653**
**14.11.84 DE 3441650**

(43) Veröffentlichungstag der Anmeldung:
**28.12.88 Patentblatt 88/52**

(45) Bekanntmachung des Hinweises auf die
Patenterteilung:
**03.08.94 Patentblatt 94/31**

(84) Benannte Vertragsstaaten:
**DE FR GB**

(56) Entgegenhaltungen:
**US-A- 1 385 019**
**US-A- 2 556 308**
**US-A- 2 910 050**
**US-A- 3 132 869**
**US-A- 3 667 504**

**PROSPEKT DER FIRMEN BUSAK + LUYKEN,
Juli 1980, Seite 2, Stuttgart, DE**

(73) Patentinhaber: **Mannesmann Rexroth GmbH
Jahnstrasse 3 - 5
D-97813 Lohr(DE)**

(72) Erfinder: **Amrhein, Reinhard
Wiesenfurt 7
D-8773 Frammersbach(DE)**
Erfinder: **Muschong,Günter
Hauptstr. 131
D-8771 Rechtenbach(DE)**
Erfinder: **Heid, Walter
Pfalzbrunnenstrasse 27
D-8771 Neustadt(DE)**

(74) Vertreter: **Wagner, Karl H. et al
WAGNER & GEYER
Patentanwälte
Gewürzmühlstrasse 5
D-80538 München (DE)**

Rank Xerox (UK) Business Services
(3.10/3.09/3.3.3)

EP 0 296 462 B1

## Beschreibung

Die Erfindung bezieht sich auf ein 2/2- Wegeventil gemäß dem Oberbegriff des Anspruchs 1.

Mit einem Wegeventil werden bekanntlich Start-, Stopp- sowie Schließrichtung eines Druckmediums gesteuert, beispielsweise um die Bewegungsrichtung eines Verbrauchers zu bestimmen. Man unterscheidet im allgemeinen zwischen Wege-Sitzventilen und Wege-Schieberventilen. Wege-Sitzventile haben im Prinzip den Vorteil der leckölfreien Absperrung, die bei Schieberventilen aufgrund des erforderlichen Passungspiels zwischen Kolben und Gehäuse bislang nicht zu erreichen ist.

Wie bereits eingangs erwähnt bezieht sich die vorliegende Erfindung auf ein 2/2-Wegeventil (ein sogenanntes Logikventil) und zwar insbesondere auf ein solches Logikventil zur Verwendung mit reinem Wasser oder mit hochwasserhaltigem Hydraulikflüssigkeiten.

In diesem Zusammenhang sei auf DE-A-2,944,706 hingewiesen, wo ausgehend von einem Hochdruckventil für den Betrieb mit hydraulischen Druckmitteln wie Wasser, Öl oder dergleichen und pneumatischen Druckmitteln wie Luft, Erdgas oder dergleichen vorgesehen wird, daß umlaufende Nuten mit Dichtungselementen im oder am Ventilgehäuse herum angeordnet sind, und zwar um eine vorzugsweise kreiszylindrische Ausnehmung des Ventilgehäuses herum, und wobei ferner der Ventilkörper einen endseitig abgeschlossenen, in Längsrichtung verlaufenden Innenkanal aufweist, der über Radialbohrungen mit der Ausnehmung im Ventilgehäuse verbunden ist.

Öllogikventile verschiedener Bauarten sind seit langem bekannt. Logikventile für hochwasserhaltige Flüssigkeiten sind in der Praxis Sitzventile, bei denen der Ventilsitz entweder aus Stahl oder Kunststoff hergestellt ist, während der Kolben aus Stahl besteht. Es ist umgekehrt auch bekannt, den Kolben aus Kunststoff herzustellen und zusammen mit einem aus Stahl bestehenden Ventilsitz zu verwenden. Logik-Schieberventile für hochwasserhaltige Flüssigkeiten haben sich in der Praxis nicht durchgesetzt, da sie nicht geeignet sind, hohe Umschaltzahlen zu erreichen. Ein Nachteil der Stahlsitz/Stahlkolbenkonstruktion besteht darin, daß bei geringsten Kratzspuren auf der Sitzfläche die hochwasserhaltige Flüssigkeit bei geschlossenem Ventil in großen Mengen wegen der geringen Viskosität strömen kann, und zwar mit hoher Geschwindigkeit. Dadurch wird die Dichtfläche in kürzester Zeit ausgewaschen, und zwar durch Strahlerosion sowie Kavitation.

Gemäß der Erfindung soll ein Logikventil für hochwasserhaltige Flüssigkeiten und reines Wasser vorgesehen werden, wobei außerordentlich viele bislang nicht erreichte Umschaltungen durch dieses Ventil erzielt werden sollen. Das erfindungsgemäße Logikventil soll nicht zehntausende, sondern vielmehr hunderttausende, ja sogar millionen Umschaltungen zulassen.

Das erfindungsgemäße Logikventil soll ferner verglichen mit den bekannten Logikventilen eine kleinere Baugröße besitzen. Bedingt durch die Kunststoff-Dichtsitz-Technik bei den bekannten Wasser-Hydraulikventilen ergibt sich nämlich ein geringerer für die Strömung zur Verfügung stehender Querschnitt, und zwar einfach deshalb, weil die FLächenbelastbarkeit des Kunststoffs gering ist (schlagartiges Schließen des Kolbens), so daß der Kunststoffsitz verhältnismäßig breit ausgelegt werden muß. Diese schlagartige Belastung beim Schließvorgang wird beim Gleitdichtungslogikventil nicht mehr vom Dichtmittel (Sitzfläche) übernommen, sondern von einem Stahl-Bund, der außerhalb der Dichtflächen angeordnet ist. Die erforderliche Sitzbreite bei Kunststoff kann bis zu 10mal größer sein als die entsprechende Sitzbreite bei Stahl. Andererseits ist ein Kunststoffsitz bei hochwasserhaltigen Flüssigkeiten erwünscht, z. B. im Bergbau, weil er zu einer sogenannten weichen Dichtung führt. Eine weiche Dichtung soll bei mitgeführten Schmutzteilchen weniger empfindlich wirken, und zwar durch "Einbetten" der Teilchen in den Weichsitz. Es soll also eine weiche Dichtung bei einem Logikventil der Kolbenbauart, d. h. einem sogenannten 2/2-Wege-Gleitdichtungslogikventil, geschaffen werden. Ganz allgemein sollen die Nachteile des Standes Technik auf dem Gebiet der Logikventile für hochwasserhaltige Flüssigkeiten überwunden werden.

Gemäß der vorliegenden Erfindung werden bei einem 2/2-Wegeventil gemäß dem Oberbegriff des Anspruchs 1 die im kennzeichnenden Teil des Anspruchs 1 genannten Maßnahmen vorgesehen. Bevorzugte Ausgestaltungen der Erfindung ergeben sich aus den Unteransprüchen.

Weitere Vorteile, Ziele und Einzelheiten der Erfindung ergeben sich aus der Beschreibung von Ausführungsbeispielen anhand der Zeichnung; in der Zeichnung zeigt:

Fig. 1    einen Längsschnitt durch ein gemäß der Erfindung ausgebildetes Logikventil einer ersten Bauart;

Fig. 2    das Symbol des Logikventils gemäß Fig. 1;

Fig. 3    einen Längsschnitt durch ein weiteres Ausführungsbeispiel eines Logikventils ähnlich dem in Fig. 1;

Fig. 4    das Symbol des Logikventils gemäß Fig. 3;

Fig. 5    einen Längsschnitt durch ein weiteres Logikventil, welches im wesentlichen mit dem Logikventil 1 übereinstimmt;

Fig. 6    das Symbol des Logikventils gemäß Fig. 5.

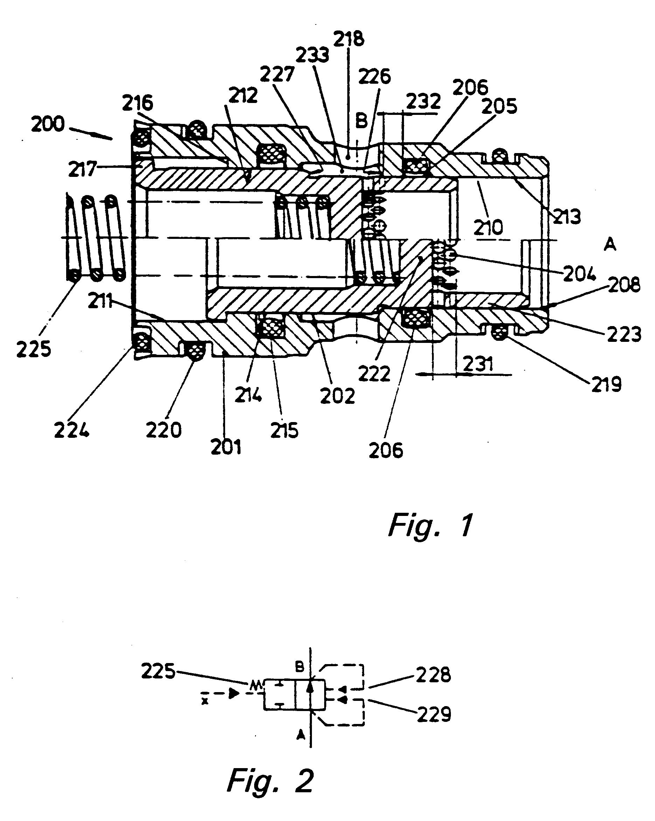

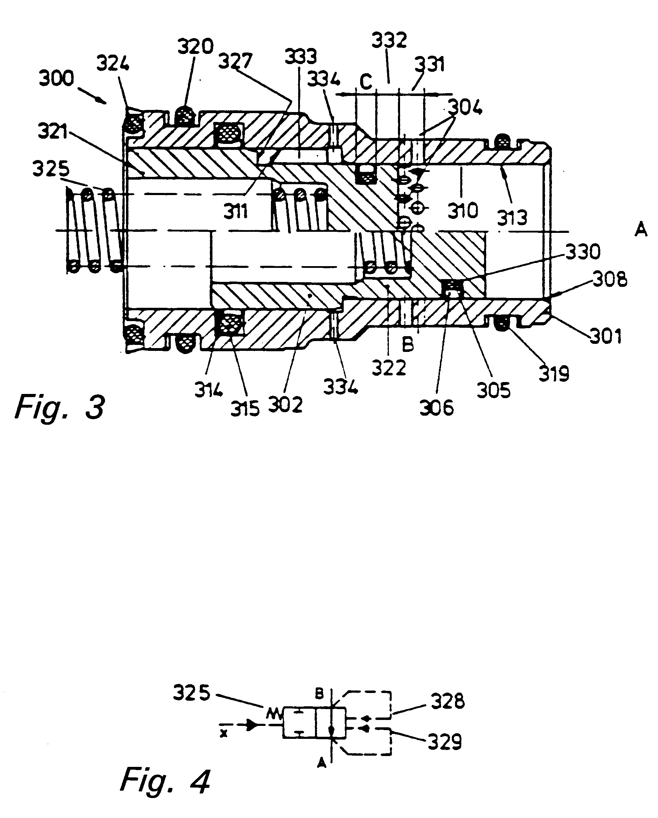

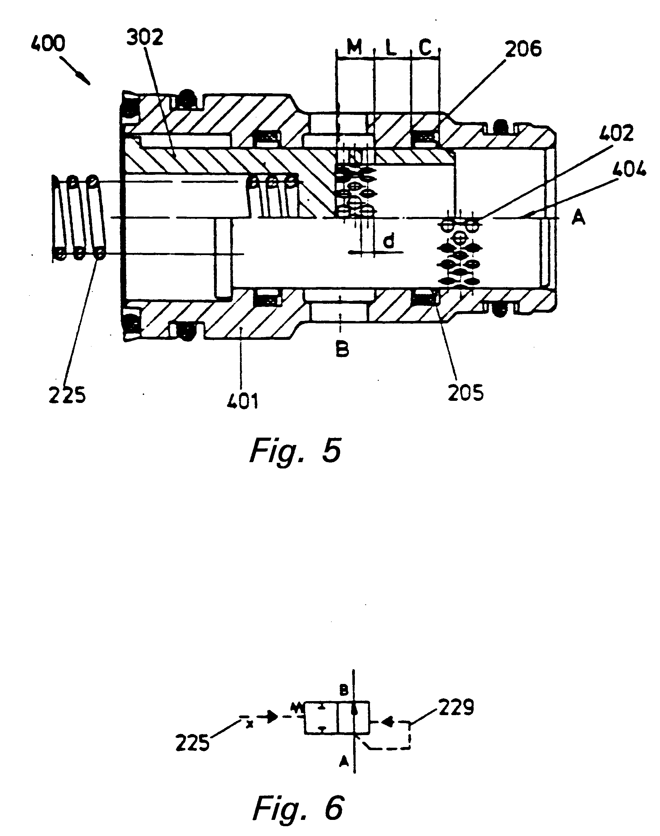

Anhand der Fig. 1 bis 6 wird im folgenden ein sogenanntes Logikventil beschrieben, d. h. ein 2/2-Wegeventil. Die Fig. 1 und 2 zeigen ein erstes, die Fig. 3 und 4 ein zweites und die Fig. 5 und 6 ein drittes Ausführungsbeispiel. Das durch diese drei Ausführungsbeispiele repräsentierte Logikventil wird insbesondere für HWF-Flüssigkeiten eingesetzt und kann daher auch als Wasser-Hydraulikventil bezeichnet werden. Bekannte 2/2-Logikventile für HWF-Flüssigkeiten sind sogenannte Sitzventile und verwenden einen Ventildichtsitz aus einem Kunststoff, der mit einem aus Stahl bestehenden Kolben zusammenarbeitet. Es ist auch bekannt, den Sitz aus Stahl herzustellen und einen Kunststoffkolben zu verwenden. Die vorliegende Erfindung realisiert ein HWF-Logikventil in der Form eines sogenannten 2/2-Wege-Gleitdichtungsventils. Durch die im folgenden zu beschreibenden erfindungsgemäßen Merkmale, insbesondere eine Kunststoffdichtung und mit dieser zusammenarbeitende Bohrungen erricht man eine weiche Abdichtung zwischen Ventilkolben und Ventilgehäuse.

In Fig. 1 ist ein erfindungsgemäßes Logikventil für HWF-Flüssigkeiten im Längsschnitt dargestellt. Im oberen Teil der Fig. 2 befindet sich das Ventil in seiner Öffnungsstellung, d. h. HWF-Flüssigkeit kann von A nach B strömen. Im unteren Teil der Fig. 1 ist das Ventil in seiner Schließstellung dargestellt, d. h. es kann keine HWF-Flüssigkeit von A nach B strömen. Fig. 2 zeigt das Symbol des Ventils gemäß Fig. 1.

Das Logikventil 200 in Fig. 1 weist eine Ventilhülse 201 auf in deren Längsbohrung 210 ein Ventilkolben 202 zwischen einer Ventilöffnungsstellung und einer Ventilschließstellung hin- und herbewegbar ist. Die Ventilhülse 201 wird beim Gebrauch des Ventils 200 in bekannter Weise in einen Einbauraum eingesetzt. Die Dichtungen 219 und 220 wie auch 224 sehen die erforderliche Abdichtung bezüglich des Einbauraums vor.

Die Längsbohrung 210 weist einen Längsbohrungsabschnitt 211 mit großem, einen Längsbohrungsabschnitt 212 mit mittlerem und einen Längsbohrungsabschnitt 213 mit kleinerem Durchmesser auf. Am Übergang vom Bohrungsabschnitt 211 zum Bohrungsabschnitt 212 wird ein Anschlag 216 gebildet. Beim Übergang vom mittleren Längsbohrungsabschnitt 212 auf den kleineren Längsbohrungsabschnitt 213 wird ein Ringanschlag 226 definiert. Benachbart zum Ringanschlag 226 ist im Bereich des mittleren Längsbohrungsabschnitts 212 ein Ringraum 233 ausgebildet, der über radial verlaufende Anschlußbohrungen 218 mit einem Raum in Verbindung steht, der von Ventilhülse 201 und dem Einbauraum gebildet wird. Dieser so gebildete Raum steht dann mit B in Verbindung.

Der Ventilkolben 202 besitz einen Abschnitt 217 mit größerem Durchmesser der im Abschnitt 211 gleitet und am Anschlag 216 anschlagen kann. Ferner ist anschließend an Abschnitt 217 ein weiterer Kolbenabschnitt 221 mit mittlerem Durchmesser vorgesehen und bildet zum Anschlag 226 hinweisend eine Ringfläche 227. An die Ringfläche 227 schließt sich ein Kolbenabschnitt mit kleinerem Durchmesser an, der im Längsbohrungsabschnitt 213 mit kleinerem Durchmesser gleiten kann. Dieser eine Querwand 222 aufweisende Kolbenabschnitt besitzt eine rohrförmige Verlängerung 223. Das Ventil 200 ist axial, d. h. stirnseitig angeströmt, d. h. das Strömungsmittel fließt in der Öffnungsstellung des Ventils von innen nach außen, d. h. von A nach B.

Die Abdichtung zwischen dem Kolben 202 und der Ventilhülse 201 wird im Bereich des Längsbohrungsabschnitts 212 durch einen in einer Ringnut der Hülse 201 angeordnete Dichtung bewirkt, die aus einem O-Ring 215 und einem zum Kolben 202 hinweisenden Turcon-Ring besteht. Weiterhin ist in einer Ringnut 230 im Bereich des Längsbohrungsabschnitts 213 ein O-Ring 206 angeordnet, der eine dünne Turcon-Ringdichtung 205 gegen den Kolben 202 drückt. Die Dichtung 205, 206 wird beim Umschalten zwischen Öffnungs- und Schließstellung vom Kolben 202 und den darin vorgesehenen Öffnungsmitteln überfahren, wobei erfindungsgemäß vorgesehen ist, daß die Öffnungsmittel nicht durch mehrere umfangsmäßig verteilte relativ große Öffnungen gebildet werden, sondern vielmehr durch eine Vielzahl von kleinen Radialbohrungen 204, die vorzugsweise in einem oder mehreren Ringen angeordnet sind.

In Fig. 1 ist die Breite der von den Radialbohrungen 204 durchbrochenen Mantelfläche des Kolbens 202 mit 231 bezeichnet. Erfindungsgemäß ist vorgesehen, daß bei Bewegung des Kolbens 202 in seine Schließstellung die Verbindung zwischen A und B zunächst unterbrochen wird, bevor die Radialbohrungen 204 in den Bereich der Dichtung 205, 206 kommen. Das bedeutet, daß die Hülse eine Stegbreite 232 zwischen dem Ringraum 232 und der Ringnut 230 aufweist, die in etwa gleich der Breite 231 vorzugsweise etwas größer ist als diese.

Der Turcon-Ring 205 ist bei der für Fig. 1 typischen Strömung von innen nach außen wie erwähnt dünn ausgebildet, d. h. seine Axialerstreckung ist deutlich größer als seine Radialerstreckung. Für seine elastische Andrückung sorgt wie erwähnt der O-Ring 206. Der Turcon-Ring besteht aus einem Kunststoffmaterial, so daß sich die für HWF-Flüssigkeiten erwünschte weiche Abdichtung ergibt. Gerade bei Anwendungen auf dem Gebiet des Bergbaus werden Logikventile mit Weichabdichtung bevorzugt. Die Verwendung eines dicken Turcon-Rings, wie er noch unter Bezugnahme auf Fig. 3 beschrieben werden wird, ist für die Anordnung in der Ringnut 230 der Ventilhülse 201 nicht zweckmäßig.

Die allgemeine Funktionsweise des Logikventils 200 gemäß den Fig. 1 und 2 ist an sich bekannt. Das Ventil 200 wird üblicherweise in seiner im unteren Teil der Fig. 1 gezeigten Schließstellung durch einen Steuerdruck x (vgl. Fig. 2) gehalten, der in Fig. 1 von links her auf den Innenraum des Kolbens 202 einwirkt. Eine Feder 225 übt ebenfalls auf den Kolben 202 eine nach rechts gerichtete Kraft aus, ist aber lediglich von sekundärer Bedeutung und dient eigentlich nur dazu, die Reibung zu überwinden. Der Steuerdruck x wird üblicherweise entweder von A oder von B her abgeleitet. Wenn man die Verbindung von A nach B herstellen möchte, so entfernt man den Steuerdruck x so daß sich der Kolben 202 in die in Fig. 1 oben gezeigt Stellung verschiebt. Es wirkt dann der bei B vorhandene Druck auf die Ringfläche 233 wie dies durch die Steuerverbindung 228 im Symbol der Fig. 2 dargestellt ist. Die andere in Fig. 2 gezeigte Steuerverbindung 229 veranschaulicht, daß natürlich der bei A vorhandene Druck auch auf den Kolben 202 einwirkt. Die Umschaltung zurück in die Schließstellung muß wieder durch Anlegen eines Steuerdrucks x geschehen.

In den Fig. 3 und 4 ist ein weiteres Ausführungsbeispiel eines Logikventils 300 gezeigt. Das Logikventil 300 unterscheidet sich von dem Logikventil 200 dadurch, daß hier die Strömung von außen nach innen erfolgt, d. h. von B nach A. Weitgehend analoge Bezugszeichen zu Fig. 1 wurden hier verwendet. Der Hauptunterschied zwischen den beiden Ausführungsbeispielen besteht darin, daß hier die Vielzahl der Radialbohrungen 304 in der Ventilhülse 201 ausgebildet ist, während die zugehörige Dichtung bestehend aus O-Ring 305 und Turconring 306 in einer Ringnut 330 des Kolbens 302 untergebracht ist. Die Kunststoff- oder Turcondichtung 306 ist hier wesentlich dicker als beim Ausführungsbeispiel gemäß Fig. 1, aber ansonsten wird auch hier der Turcon-Ring 306 elastisch gegen die zugehörige Dichtfläche des Kolbens 302 gedrückt.

Im einzelnen weist das Logikventil 300 eine Ventilhülse 201 auf, wobei in deren Längsbohrung 310 ein Ventilkolben 302 hin- und herbewegbar angeordnet ist. Die Hülse 301 bildet einen einen größeren Durchmesser besitzenden Längsbohrungsabschnitt 311 und einen einen kleineren Durchmesser aufweisenden Längsbohrungsabschnitt 313. In entsprechender Weise besitzt der Kolben 302 einen einen größeren Durchmesser aufweisenden Abschnitt 321 und einen einen kleineren Durchmesser aufweisenden Abschnitt 322. Der Übergang vom Kolbenabschnitt 321 auf den Kolbenabschnitt 322 bildet eine Ringfläche 327, die in Schließstellung an einen Anschlag 326, gebildet zwischen Längsbohrungsabschnitt 311 und Längsbohrungsabschnitt 313 anschlägt. Eine Druckausgleichsbohrung 334 verläuft von der Außenseite der Ventilhülse 201 zu einem Ringraum 333, gebildet zwischen Anschlag 326 und Ringfläche 327.

Ähnlich wie beim Ventil 200 ist auch hier in einer Ringnut der Ventilhülse 301 ein O-Ring 320 mit einem den Ventilkolben 202 berührenden Turcon-Ring 314 vorgesehen. Ferner ist die Ventilhülse 201 außen mit Dichtungen 319, 320 und 324 ausgestattet, um eine Abdichtung gegenüber dem Einbauraum zu schaffen.

Die Steuerverbindung 328 - vgl. Fig. 4 - wird hier durch die Druckausgleichsbohrung 334 sichergestellt.

Die Vielzahl der Radialbohrungen 304 in der Ventilhülse 201 ersetzt praktisch die radialen Anschlußbohrungen 218 gemäß Fig. 1 und ist daher in Fig. 3 mit 310 bezeichnet.

Die Breite 331 der durch die Vielzahl der Radialbohrungen 304 durchbrochenen Fläche ist gleich vorzugsweise auch etwas kleiner als die Stegbreite 332 eines durch die Ringnut 330 am Kolben 302 gebildeten Stegs. Das bedeutet, daß beim Übergang von der Öffnungsstellung des Ventils 300 in seine Schließstellung zunächst alle Radialbohrungen 304 vom Steg mit der Stegbreite 332 überlaufen sind, bevor daß bei B anstehende Druckmittel zur Dichtung 305, 306 gelangt.

Die Funktionsweise des Logikventils 300 ist dem Fachmann aufgrund der obigen Beschreibung geläufig.

Das Ausführungsbeispiel gemäß den Fig. 5 und 6 betrifft ein Logikventil 400, welches im wesentlichen mit dem Logikventil 200 gemäß Fig. 1 und 2 übereinstimmt, so daß hier lediglich auf die Unterschiede eingegangen werden muß. Beim Logikventil 400 ist keine der Ringfläche 227 in Fig. 1 entsprechende Fläche vorgesehen, so daß dementsprechend in Fig. 6 eine der Steuerverbindung 228 entsprechende Verbindung fehlt. Ferner sind hier drei Ringe von gegeneinander versetzten Radialbohrungen 404 im Ventilkolben 402 ausgebildet. Fig. 5 zeigt besonders deutlich den O - Ring 206 und die flache und breite Ausbildung des Turkonrings 205. Im übrigen wurden einige der aus den Fig. 1 und 2 gebräuchlichen Bezugszeichen in die Fig. 5 und 6 eingetragen. Die Vetilhülse oder Buchse ist hier mit 401 bezeichnet. Bei dieser vereinfachten Ventilvariante gegenüber dem Ausführungsbeispiel gemäß Fig. 1 ist nur noch ein hydraulisch wirksamer Durchmesser vorhanden, was zu einer absoluten Druckausgeglichenheit des Kolbens 402 in bezug auf den bei B anstehenden Lastdruck $p_B$ führt. Das Ventil 400 schließt bei $p_X$ = $p_A$ nur noch über die Kraft der Feder 225, wobei im Gegensatz zu einem Logiksitzventil die Dichtigkeit nicht von der Schließkraft abhängt. D.h., bei kleinsten Drücken ergibt sich absolute Dichtigkeit.

Die Darstellung gemäß Fig. 5 sei dazu verwendet, einige allgemeine Ausführungen hinsichtlich der Bohrungsbereichbreite M, der Stegbreite L und der Dichtungsbreite C zu machen. Beim Ausführungsbeispiel gemäß Fig. 1 entspricht die Bohrungsbereichsbreite M dem Bezugszeichen 231, die Stegbreite L dem Bezugszeichen 232 und die Dichtungsbreite C ist dort nicht eingetragen, ist aber ähnlich wie in Fig. 5 dargestellt vorhanden. Beim Ausführungsbeispiel gemäß Fig. 3 ist die Bohrungsbereichsbreite M durch das Bezugszeichen 331 gekennzeichnet, die Stegbreite L ist durch das Bezugszeichen 332 bezeichnet und die Dichtungsbreite C ist in dieser Fig. eingetragen.

In sämtlichen Ausführungsbeispielen soll der Durchmesser einer der Radialbohrungen 204, 304 und 404 mit d bezeichnet sein, wie dies nur in Fig. 5 dargestellt ist.

Zunächst ist festzustellen, daß der Durchmesser d der Bohrungen möglichst klein sein soll. Je kleiner der Durchmesser der Bohrungen, desto besser. Es muß jedoch ein Kompromiß hinsichtlich der Kosten getroffen werden. Wenn $d \leq C/2$ ist, so ergeben sich günstige Verhältnisse. Im Bohrungsbereich sollte der verbleibende tragende Anteil des Materials ungefähr 70 % betragen, so daß die Bohrungen ungefähr 30 % ausmachen.

Die Stegbreite L soll vorzugsweise größer als die Dichtungsbreite C sein.

In wievielen Ringen die Radialbohrungen angeordnet sind, kann an sich frei gewählt werden. Die Ringe müssen allerdings nicht gleichmäßig mit der maximal möglichen Anzahl radialer Bohrungen versehen sein. Vielmehr können die Ringe beispielsweise, um ein "weiches" Schaltverhalten zu erzielen, mit einer entsprechend veränderlichen Anzahl von Bohrungen ausgestattet werden. Der bei Logiksitzventilen zu diesem Zweck eingesetzte "Dämpfungszapfen" wird dadurch überflüssig.

Allgemein soll die Stegbreite $L > nd$ sein, wobei $n = 1, 2, 3 \ldots$ Dabei ist "n" die Anzahl der axial versetzt angeordneten Bohrungsringe bezeichnet. Beispielsweise ist in den Fig. 1 und 3 $n = 2$.

Der Ausdruck "Turcon" ist ein Warenzeichen für eine Dichtung, die Polytetrafluorethylen (PTFE) als Basiswerkstoff enthält. Im Ventilgehäuse wird eine Turcon-Double-Delta-Seal und im Kolben ein Turcon-Glyd-Ring verwendet.

## Patentansprüche

1.  2/2-Wegeventil (Logikventil) für die Verwendung mit Wasser oder HWF-Flüssigkeiten, wobei folgendes vorgesehen ist:
    Ventilgehäusemittel (201, 301, 401) in deren Längsbohrung (210, 310) Kolbenmittel (202, 302) hin- und herbewegbar angeordnet sind, und zwar zwischen einer zwei Anschlüsse A, B verbindenden Öffnungsstellung und einer die zwei Anschlüsse A, B voneinander trennenden Schließstellung;
    Dichtungsmittel angeordnet zwischen den Kolbenmitteln und den Gehäusemitteln, bestehend aus einer Kunststoffringdichtung (205,206;305,306), die zwischen den Anschlüßen A und B vorgesehen ist;
    und eine Vielzahl von kleinen Öffnungen oder Bohrungen (204,304) derart, daß im Öffnungszustand des Ventils das Wasser oder die HWF-Flüssigkeit durch die genannten kleinen Öffnungen oder Bohrungen (204,304) strömen kann,
    dadurch gekennzeichnet, daß die Kunststoffringdichtung (205,206;305,306) in einer Ringnut am Innenumfang der Ventilgehäusemittel (201) bzw. einer Ringnut am Außenumfang der Kolbenmittel (302) sitzt und dabei eine Dichtungsbreite C definiert; daß ferner in den Ventilgehäusemitteln bzw. den Kolbenmitteln zwischen der Kunststoffringdichtung und dem zugehörigen Anschluß B bzw. A Stegmittel (232,332) ausgebildet sind, die an der zugehörigen Partnerfläche anliegen und eine Stegbreite L besitzen, und daß ferner die Öffnungen oder Bohrungen (204,304) in den Kolben- (202) bzw. den Ventilgehäusemitteln (301) vorgesehen sind mit einer Bohrungsbereichsbreite M, die kleiner ist als die Stegbreite L.

2.  2/2-Wegeventil (Logikventil) nach Anspruch 1, dadurch gekennzeichnet, daß die Öffnungen Bohrungen (204, 304) sind, die in einem oder mehreren Ringen (Umfangsreihen) angeordnet sind.

3.  2/2-Wegeventil (Logikventil) nach einem oder mehreren der vorhergehenden Ansprüche, dadurch gekennzeichnet, daß bei Anordnung der Bohrungen in mehreren Ringen die Bohrungen der einzelnen Ringe gegeneinander versetzt sind.

4.  2/2-Wegeventil (Logikventil) nach einem oder mehreren der vorhergehenden Ansprüche, dadurch gekennzeichnet, daß zur Erreichung eines bestimmten Schaltverhaltens des Ventils, beispielsweise eines weichen Schaltverhaltens, die Anzahl der Bohrungen in unterschiedlichen Ringen unterschiedlich gewählt ist.

5.  2/2-Wegeventil (Logikventil) nach einem oder mehreren der vorhergehenden Ansprüche, dadurch gekennzeichnet, daß der Durchmesser der Bohrungen oder die Größe der Öffnungen möglichst klein gewählt ist.

6. 2/2-Wegeventil (Logikventil) nach einem oder mehreren der vorhergehenden Ansprüche, dadurch gekennzeichnet, daß der Durchmesser d der Bohrungen kleiner als die Hälfte der Dichtungsbreite C ist.

7. 2/2-Wegeventil (Logikventil) nach einem oder mehreren der vorhergehenden Ansprüche, dadurch gekennzeichnet, daß innerhalb der Bohrungsbereichsbreite M der tragende Anteil des Materials 70 % beträgt, während 30 % Bohrungen sind.

8. 2/2-Wegeventil (Logikventil) nach einem oder mehreren der vorhergehenden Ansprüche, dadurch gekennzeichnet, daß die Kolbenmittel (202,203) eine Ringfläche (227, 327) bilden.

9. 2/2-Wegeventil (Logikventil) nach einem oder mehreren der vorhergehenden Ansprüche, dadurch gekennzeichnet, daß für ein axial angeströmtes Ventil die Vielzahl der Bohrungen im Kolben (202, 302) ausgebildet ist, und daß der Kunststoffring (205) der Kunststoffringdichtung (205,206) verhältnismäßig breit und dünn ausgebildet ist.

10. 2/2-Wegeventil (Logikventil) nach einem oder mehreren der vorhergehenden Ansprüche, dadurch gekennzeichnet, daß Dichtungsmittel (214, 215; 314, 315) eine Abdichtung zum Steueranschluß des Ventils hin vorsehen.

11. 2/2-Wegeventil (Logikventil) nach einem der vorhergehenden Ansprüche, dadurch gekennzeichnet, daß der Kunststoffring (205) ein Turcon-Ring ist.

12. 2/2-Wegeventil (Logikventil) nach Anspruch 11, dadurch gekennzeichnet, daß der Turcon-Ring (205) elastisch gegen die abzudichtende Partnerfläche beispielsweise durch einen darunter angeordneten O-Ring (206) gedrückt wird.

**Claims**

1. A 2/2 directional control valve (logic valve) for the use with water or HWF liquids comprising: valve housing means (201, 301, 401), a longitudinal bore (210, 310) in said valve housing means, spool means (202, 302) reciprocally mounted in said longitudinal bore between an opening position connecting two ports A, B and a closing position separating said two ports A, B from each other,

sealing means provided between said spool means and said housing means, said sealing means comprising a plastic ring seal (205, 206; 305, 306) between said ports A, B, and a plurality of small openings or bores (204, 304) such that in the opening position of said valve the water or HWF liquid may flow through said small openings or bores (204, 304), characterized in that said plastic ring seal (205, 206; 305, 306) is placed in an annular groove at the inner circumference of said valve housing means (201), and an annular groove at the outer circumference of said spool means (302), respectively, and defines a sealing width C, and that further in said valve housing means and said spool means, respectively, land means (232, 332) are formed between said plastic ring seal and the associated port B or A, respectively, said land means being in contact with the corresponding associated surface and having a land width L, and that further the openings or bores (204, 304) in said spool means (202) or in said valve means (301), respectively, are provided with a width M of the area of bores, said width M being smaller than the land width L.

2. A 2/2 directional control valve (logic valve) according to claim 1, characterized in that the openings are bores (204, 304) which are arranged in one or a plurality of rings (circumferential rows).

3. A 2/2 directional control valve (logic valve) according to one or more of the preceding claims, characterized in that for an arrangement of the bores in a plurality of rings, the bores of the individual rings are offset with respect to each other.

4. A 2/2 directional control valve (logic valve) according to one or more of the preceding claims, characterized in that for the achievement of a particular switching characteristic of the valve, such as a soft switching characteristic, the number of the bores in different rings is chosen to be different.

5. A 2/2 directional control valve (logic valve) according to one or more of the preceding claims, characterized in that the diameter of the bores or the size of the openings is selected to be as small as possible.

6. A 2/2 directional control valve (logic valve) according to one or more of the preceding claims, characterized in that the diameter d of the bores is less than half of the sealing width C.

**7.** A 2/2 directional control valve (logic valve) according to one or more of the preceding claims, characterized in that the supporting portion of the material within the width M of the area of bores is 70%, while the bores comprise 30% thereof.

**8.** A 2/2 directional control valve (logic valve) according to one or more of the preceding claims, characterized in that the spool means (202, 203) form an annular surface (227, 327).

**9.** A 2/2 directional control valve (logic valve) according to one or more of the preceding claims, characterized in that the plurality of bores is provided in the spool means (202, 302) for a valve having axial flow, and that the plastic ring (205) of said plastic ring seal (205, 206) is designed to be relatively wide and thin.

**10.** A 2/2 directional control valve (logic valve) according to one or more of the preceding claims, characterized in that sealing means (214, 215; 314, 315) provide a sealing effect with respect to the control port of the valve.

**11.** A 2/2 directional control valve (logic valve) according to one or more of the preceding claims, characterized in that the plastic ring (205) is a Turcon ring.

**12.** A 2/2 directional control valve (logic valve) according to claim 11, characterized in that said Turcon ring (205) is elastically pressed against the associated surface to be sealed, such as by means of an O-ring (206) positioned underneath said Turcon ring.

## Revendications

**1.** Vanne à 2/2 voies (vanne logique) pour l'utilisation avec de l'eau ou des liquides à haute teneur en eau, dans laquelle il est prévu:
- des moyens constituant un carter de vanne (201, 301, 401), dans l'alésage longitudinal (210, 310) desquels sont disposés des pistons (202, 302), mobiles dans les deux sens, et cela entre une position d'ouverture reliant deux raccords A, B, et une position de fermeture séparant, l'un de l'autre, ces deux raccords A, B,
- des moyens d'étanchéité, placés entre les pistons et le carter, constitués d'un joint d'étanchéité annulaire en matière plastique (205, 206; 305, 306), qui est prévu entre les raccords A et B, et
- un certain nombre de petits orifices ou alésages (204, 304), de telle façon qu'en position d'ouverture de la vanne, l'eau ou le liquide puisse s'écouler au travers desdits orifices ou alésages (204, 304), caractérisée en ce que le joint d'étanchéité annulaire en matière plastique (205, 206; 305, 306) est placé dans une rainure annulaire, sur la périphérie intérieure du carter (201), ou dans une rainure annulaire sur la périphérie extérieure des pistons (302), et détermine ainsi une largeur d'étanchéité C; en ce que, de plus, dans le carter et/ou le piston, entre le joint d'étanchéité annulaire en matière plastique et le raccord associé, respectivement B ou A, sont réalisés des moyens formant entretoises (232, 332), qui sont placés contre les surfaces correspondantes associées et présentent une largeur d'entretoise L, et en ce que, de plus, les orifices ou alésages (204, 304) sont prévus respectivement dans les pistons (202) ou le carter (301), avec une largeur de la zone des alésages M, qui est plus petite que la largeur d'entretoise L.

**2.** Vanne à 2/2 voies (vanne logique) suivant la revendication 1, caractérisée en ce que les orifices sont des alésages (204, 304), disposés suivant un ou plusieurs anneaux (rangées périphériques).

**3.** Vanne à 2/2 voies (vanne logique) suivant l'une ou plusieurs des revendications précédentes, caractérisée en ce que, dans le cas de la disposition des alésages en plusieurs anneaux, les alésages des différents anneaux sont décalés les uns par rapport aus autres.

**4.** Vanne à 2/2 voies (vanne logique) suivant l'une ou plusieurs des revendications précédentes, caractérisée en ce que, pour obtenir un comportement déterminé de coupure de la vanne, par exemple un comportement de coupure progressif, le nombre des alésages dans des anneaux différents est choisi différent.

**5.** Vanne à 2/2 voies (vanne logique) suivant l'une quelconque ou plusieurs des revendications précédentes, caractérisée en ce que le diamètre des alésages, ou la grosseur des orifices, est choisi le plus petit possible.

**6.** Vanne à 2/2 voies (vanne logique) suivant l'une quelconque ou plusieurs des revendications précédentes, caractérisée en ce que le diamètre d des alésages est plus petit que la moitié de la largeur d'étanchéité C.

7. Vanne à 2/2 voies (vanne logique) suivant l'une quelconque ou plusieurs des revendications précédentes, caractérisée en ce qu'à l'intérieur de la largeur de la zone des alésages M, la partie de la matière servant de support représente 70 %, tandis que les alésages représentent 30 %.

8. Vanne à 2/2 voies (vanne logique) suivant l'une quelconque ou plusieurs des revendications précédentes, caractérisée en ce que les pistons (202, 203) présentent une surface annulaire (227, 327).

9. Vanne à 2/2 voies (vanne logique) suivant l'une quelconque ou plusieurs des revendications précédentes, caractérisée en ce que, pour une vanne alimentée par un écoulement axial, on réalise la multiplicité des alésages dans le piston (202, 302), et en ce que la bague en matière plastique (205) du joint d'étanchéité annulaire (205, 206) est réalisée proprtionnellement large et fine.

10. Vanne à 2/2 voies (vanne logique) suivant l'une quelconque ou plusieurs des revendications précédentes, caractérisée en ce que des moyens d'étanchéité (214, 215; 314, 315) procurent une étanchéité vers le raccord de commande de la vanne.

11. Vanne à 2/2 voies (vanne logique) suivant l'une quelconque des revendications précédentes, caractérisée en ce que la bague de matière plastique (205) est une bague en "Turcon".

12. Vanne à 2/2 voies (vanne logique) suivant la revendication 11, caractérisée en ce que la bague en "Turcon" (205) est appuyée élastiquement contre la surface correspondante à rendre étanche, par exemple au moyen d'un anneau torique (206) disposé en-dessous d'elle.

*Fig. 1*

*Fig. 2*

Fig. 3

Fig. 4

Fig. 5

Fig. 6